# EUROPÄISCHE PATENTSCHRIFT

(11) **EP 1 782 153 B1**
(45) Veröffentlichungstag und Bekanntmachung des Hinweises auf die Patenterteilung: **01.04.2009**
(21) Anmeldenummer: 05777337.6
(22) Anmeldetag: 19.08.2005
(51) Int. Cl.: G06F 1/00, G11B 20/00

(54) **DURCH AUTHENTISIERUNG GESICHERTER ZUGRIFF AUF EINEN DATENTRÄGER MIT MASSENSPEICHER UND CHIP**
AUTHENTICATION-SECURED ACCESS TO A DATA CARRIER COMPRISING A MASS STORAGE DEVICE AND CHIP
ACCES SECURISE PAR AUTHENTIFICATION A UN SUPPORT DE DONNEES PRESENTANT UNE MEMOIRE DE MASSE ET UNE PUCE

(30) Priorität: 20.08.2004 DE 102004040462
(43) Veröffentlichungstag der Anmeldung: 09.05.2007
(73) Patentinhaber: Giesecke & Devrient GmbH, 81677 München (DE)
(72) Erfinder: BRÄUTIGAM, Thomas, 83083 Riedering (DE); JOHNE, Andreas, 82194 Gröbenzell (DE)
(86) Internationale Anmeldenummer: PCT/EP2005/008997
(87) Internationale Veröffentlichungsnummer: WO 2006/021383

(56) Entgegenhaltungen:
- EP-A- 1 349 058
- WO-A-02/11081
- WO-A-94/06071
- DE-A1- 10 301 927
- FR-A- 2 790 346
- US-A- 5 905 798
- US-A- 5 991 399
- US-A1- 2003 079 133
- US-B1- 6 357 005

## Beschreibung

Die Erfindung betrifft ein Verfahren zum Zugreifen auf den Massenspeicher eines Datenträgers mit einem Massenspeicher und einem Chip, wobei für die Nutzung der Daten eine Authentisierung zwingend erforderlich ist. Weiter betrifft die Erfindung einen entsprechenden durch ein Erfordernis der Authentisierung gesicherten Datenträger, sowie ein Verfahren zum Laden von Daten in einen solchen Datenträger.

Der Datenträger im Sinn der Erfindung mit einem Massenspeicher ist z.B. ein Datenträger mit einem optischen (Massen-)Speicher wie z.B. einen Compact-Disk (CD), wiederbeschreibbare CD (CD-RW), Digital Versatile Disk (DVD) oder DVD-RW. Alternativ kann als Datenträger ein Datenträger mit einem elektronischen Massenspeicher wie z.B. einem Flash-Speicher, ROM oder EEPROM-Speicher vorgesehen sein, z.B. eine Compact Flash (CF) Speicherkarte, eine Secure Disk (SD) Speicherkarte, eine Multi Media Disk (MMD) oder eine ähnliche Speicherkarte, wie sie z.B. in digitalen Multimediageräten wie z.B. Digitalkameras, Camcordern, MP3-Playern und dergleichen verwendet wird. Ein Datenträger mit einem optischen Massenspeicher hat wahlweise eine runde Form, entsprechend einer üblichen CD oder DVD. Alternativ hat der Datenträger mit einem optischen Massenspeicher eine rechteckige Form, entsprechend einer Chipkarte, die z.B. die Außenmaße einer Chipkarte gemäß ISO/IEC 7816 hat, die aber zusätzlich ein Mittelloch und einen ringförmigen Massenspeicher hat, wobei die Außenmaße des Datenträgers in Bezug auf das Mittelloch die Abmessungen einer üblichen CD oder DVD nicht überschreiten, so dass der optische Massenspeicher des Datenträgers in einem handelsüblichen CD- oder DVD-Laufwerk ausgelesen werden kann.

Der Chip bei der Erfindung ist vorzugsweise in ein Chipmodul integriert und derart kontaktiert, dass er mit einem Schreib- und/oder Lesegerät kontaktlos und/oder kontaktbehaftet kontaktierbar ist. Wahlweise ist der Chip gemäß ISO/IEC 7816 (kontaktbehaftet) bzw. ISO/IEC 10 536 (kontaktlos) bzw. ISO/IEC 14 443 (kontaktlos) kontaktierbar. Alternativ ist der Chip nach einem beliebigen anderen Protokoll kontaktierbar, z.B. USB, RS232/V.24.

Programm-Software zur Installation in Rechnern jeder Art wie z.B. Personal Computern oder Kleinrechnern (Personal Digital Assistant, Mobiltelefon) wird verbreitet in Datenträgern mit optischen Massenspeichern wie z.B. CDs oder DVDs ausgeliefert. Musikdaten und Filmdaten sind ebenfalls verbreitet in CDs und DVDs gespeichert. Multimediadaten für digitale Multimediageräte wie Digitalkameras, digitale Camcorder, Musik-/Film-Abspielgeräte wie MP3-Player und dergleichen sind häufig in Datenträgern mit elektronischen Massenspeichern gespeichert wie Compact Flash (CF) Speicherkarten, Secure Disk (SD) Speicherkarten etc.

Zum Schutz gegen Raubkopien sind die Daten im Massenspeicher häufig ganz oder teilweise verschlüsselt. Hierdurch sind die Daten beispielsweise unlesbar. Multimediadaten wie Musikdaten oder Filmdaten können durch die Verschlüsselung verzerrt oder verrauscht sein. Bei Demo-Versionen kann vorgesehen sein, dass die Daten mit Ausnahme eines zu Demonstrationszwecken freigegebenen Teils der Daten verschlüsselt sind.

Aus DE 19616 819 A1 ist eine CD mit einem Chip als Zugriffsschutz für die Informationen der CD bekannt. Die CD hat einen kreisförmigen CD-Körper mit einer informationstragenden Schicht. Zusätzlich sind in die CD ein Chip und eine Spule zur kontaktlosen Übertragung von Daten zwischen dem Chip und einem Datenverarbeitungsgerät integriert. In dem Chip sind Daten gespeichert und können Daten verarbeitet werden, ohne die keine oder keine korrekte Bearbeitung der auf der CD gespeicherten Informationen möglich ist. Die gespeicherten Daten im Chip sind z.B. Schlüssel oder Algorithmen zur Entschlüsselung der auf der CD gespeicherten Informationen.

Aus WO 00/51119 ist eine CD-ROM oder ähnliche optische Scheibe mit einem Chip als Zugriffsschutz für die Daten der CD-ROM bekannt. In der CD-ROM sind Daten abgespeichert, die ganz oder teilweise verschlüsselt sind. Der Chip enthält einen geheimen Schlüssel, mit dem sich die verschlüsselten Daten der CD-ROM entschlüsseln lassen, ohne dass der Schlüssel den Chip verlässt, sowie eine Datenaustauscheinrichtung. Vorzugsweise enthält der Chip den zum Entschlüsseln erforderlichen Kryptoprozessor. Der Schlüssel kann für jede CD-ROM individuell sein. Bei der Herstellung der CD-ROM werden Daten mit dem Schlüssel verschlüsselt und in die CD-ROM gespeichert. Der verwendete Schlüssel wird in den Chip gespeichert, zum wieder Entschlüsseln der verschlüsselten Daten. Bei der Nutzung der CD-ROM werden Daten aus der CD-ROM in einen Rechner ausgelesen und vom Rechner aus an den Chip gesandt. Im Chip werden die Daten mit dem Schlüssel entschlüsselt und schließlich über die Datenaustauscheinrichtung des Chips ausgegeben, z.B. an den Rechner. Für jede Nutzung der CD-ROM ist somit der Zugriff auf den Chip erforderlich. Daher ist eine Kopie der CD-ROM, bei der nur der optische Speicher kopiert wird, nicht funktionsfähig. Dadurch, dass die Daten innerhalb des Chips entschlüsselt werden und der Schlüssel den Chip nie verlässt, kann weiter der Schlüssel nicht kopiert werden. Folglich kann keine funktionsfähige Kopie der CD-ROM angefertigt werden.

Die aus WO 00/51119 bekannte CD-ROM mit dem Chip kann somit zwar nicht kopiert werden. Das Original der CD-ROM kann allerdings beliebig genutzt, beispielsweise auf unterschiedlichen Computern bzw. Abspielgeräten, und beliebig an andere Nutzer weiterverliehen werden.

Häufig ist es gewünscht, dass nur der berechtigte Erstnutzer, z.B. der zahlende Käufer oder ein anderweitig Berechtigter, die CD-ROM nutzen kann. Dieses Problem ist bei der CD-ROM aus WO 00/51119 nicht gelöst.

Aus der US 6,357,005 B1 ist ein Verfahren zum Zugriff auf einen Datenträger mit einem Massenspeicher und einem Chip in Gestalt einer CD-ROM bekannt, bei dem der Zugriff von der Präsentation einer mit dem Datenträger verknüpften Chipkarte abhängig gemacht wird. Die Daten sind auf dem Datenträger verschlüsselt abgelegt und müssen mittels des Datenträgerchips entschlüsselt werden. Auf der Chipkarte befindet sich zumindest ein Teil des dafür notwendigen Schlüssels. Ein Zugriff auf den Datenträger erzwingt somit stets die Präsentation der zugehörigen Chipkarte. Dieser gegenüber muß sich ein Nutzer zudem authentisieren. Das Verfahren bedingt die Handhabung zweier Medien und ist insofern vergleichsweise aufwendig.

US-A-2003/079133 offenbart ein Verfahren zum Digital Right Management (DRM), bei dem Inhaltsdaten von einem Herausgeber verschlüsselt und so an Endnutzer abgegeben werden. Gleichzeitig werden korrespondierende Entschlüsselungsschlüssel bereitgestellt, die auf Nutzungseinrichtungen übertragen werden können. Fortan kann an diesen Nutzungseinrichtungen ein Zugriff auf die verschlüsselten Inhaltsdaten erfolgen, um diese auszulesen. Zugriffe von dazu nicht berechtigten Nutzungseinrichtungen auf einen Datenträger können bei diesem Verfahren nicht erkannt werden.

US-A-5,991,399 beschreibt ein Authentisierungsverfahren unter Verwendung von besonders vertrauenswürdigen Komponenten. Von einem Server wird dabei unter Verwendung von Identifizierungsdaten der Nutzungseinrichtung ein Schlüssel erstellt, mit dem ein in der Nutzungseinrichtung vorliegender verschlüsselter Datenträger entschlüsselt werden kann. Auch bei dieser bekannten Lösung kann ein Datenträger den Zugriff durch eine nicht berechtigte Nutzungseinrichtung nicht erkennen.

DE-A-103 01 927 beschreibt einen Datenträger, der auf eine bestimmte Nutzungseinrichtung individualisiert ist. Die Individualisierung erfolgt mittels eines in der Nutzungseinrichtung untergebrachten Chips, in dem eine datenträgerindividuelle Information gespeichert ist.

Aus WO 02/11081 ist ein weiterer Datenträger (z.B. CD oder DVD) mit einem optischen Speicher, in dem Daten zumindest teilweise verschlüsselt abgespeichert sind, und mit einem Chip, in dem ein Schlüssel zum Entschlüsseln der verschlüsselten Daten abgespeichert ist, bekannt. Gemäß WO 02/11081 werden bei einem Verfahren zum Auslesen des Datenträgers die Daten mit einer Schreib/ Lesevorrichtung aus dem optischen Speicher ausgelesen, an den Chip geliefert, innerhalb des Chips mit dem Schlüssel entschlüsselt und anschließend an die Schreib/Lesevorrichtung ausgegeben. Der Chip führt an der Schreib/ Lesevorrichtung eine Authentifikationsprüfung durch. Nur nach einer positiv verlaufenen Authentifikationsprüfung der Schreib/Lesevorrichtung gibt der Chip ein Auslesen der in dem optischen Speicher enthaltenen verschlüsselten Daten durch die Schreib/- Lesevorrichtung frei. Wie das Erzwingen der Authentifikation erzielt wird, ist in WO 02/11081 nicht angegeben. Ein Datenträger, der eine solche Authentifikation erzwingt und somit die Daten im optischen Speicher gegen unbefugte Nutzung schützt, ist in WO 02/11081 ebenfalls nicht angegeben.

Ausgehend von dem aus WO 02/11081 verwendet für die zweiteilige Form bekannten Verfahren zum Auslesen von Daten aus dem Datenträger liegt der Erfindung die Aufgabe zu Grunde, ein sicheres Verfahren zum Zugreifen auf den Massenspeicher eines Datenträgers der eingangs genannten Art zu schaffen, bei dem für die Nutzung der Daten eine Authentisierung zwingend erforderlich ist, und einen entsprechenden Datenträger sowie ein Verfahren zum Laden von Daten in einen solchen Datenträger anzugeben.

Die Aufgabe wird gelöst durch ein Verfahren nach einem der unabhängigen Verfahrensansprüche und durch einen Datenträger nach dem unabhängigen Vorrichtungsanspruch. Vorteilhafte Ausgestaltungen der Erfindung sind in den abhängigen Ansprüchen angegeben.

Das erfindungsgemäße Verfahren zum Zugreifen auf den Massenspeicher eines Datenträgers gemäß dem unabhängigen Anspruch 1 geht von einem Datenträger mit einem Massenspeicher und einem Chip aus. Für den Zugriff auf den Massenspeicher mittels einer Nutzungseinrichtung ist eine Authentisierung der Nutzungseinrichtung gegenüber dem Chip zwingend erforderlich. Gemäß der Erfindung wird das zwingende Erfordernis der Authentisierung dadurch erreicht, dass bei einem Zugriff einer Nutzungseinrichtung auf den Datenträger, um auf den Massenspeicher zuzugreifen, der Chip daraufhin überprüft wird, ob in dem Chip ein für die Nutzungseinrichtung individuelles Datum abgespeichert ist, durch das der Datenträger im Hinblick auf die Nutzungseinrichtung personalisiert ist. Der Zugriff auf den Massenspeicher des Datenträgers, in dem die begehrten Daten (Nutzdaten) abgespeichert sind, wird nur ermöglicht, falls in dem Chip mindestens ein vorbestimmtes individuelles Datum der Nutzungseinrichtung abgespeichert ist.

Weiter wird, falls gemäß der Überprüfung kein individuelles Datum im Chip abgespeichert ist, mindestens ein vorbestimmtes individuelles Datum der Nutzungseinrichtung in den Chip gespeichert. Mit anderen Worten wird der Datenträger auf die Nutzungseinrichtung personalisiert, wenn er noch nicht auf eine spezifische Nutzungseinrichtung personalisiert ist, beispielsweise weil der Datenträger erstmalig in Betrieb genommen wird. Weiter wird, bevor das vorbestimmte individuelle Datum der Nutzungseinrichtung in den Chip gespeichert wird, durch den Chip an die Nutzungseinrichtung ein im Chip abgespeicherter Verschlüsselungsschlüssel gesendet. Die Nutzungseinrichtung verschlüsselt das vorbestimmte individuelle Datum mit dem Verschlüsselungsschlüssel und sendet das verschlüsselte individuelle Datum an den Chip. Zudem werden, falls gemäß der Überprüfung in dem Chip bereits mindestens ein vorbe- stimmtes individuelles Datum abgespeichert ist, das im Chip abgespeicherte individuelle Datum und ein entsprechendes aus der zugreifenden Nutzungseinrichtung bereitgestelltes Datum miteinander verglichen. Nur bei einem positiven Vergleichsergebnis wird der Zugriff der Nutzungseinrichtung auf den Massenspeicher des Datenträgers ermöglicht.

Falls in dem Chip kein individuelles Datum abgespeichert ist, wird der Zugriff auf den Massenspeicher des Datenträgers zumindest vorerst nicht gewährt. In dem Fall, wenn in dem Chip ein individuelles Datum abgespeichert ist, muss es sich um ein individuelles Datum genau der zugreifenden Nutzungseinrichtung handeln. Der Datenträger muss mit anderen Worten auf eine spezielle Nutzungseinrichtung personalisiert sein. Die in seinem Massenspeicher abgespeicherten Daten (Nutzdaten) können nur mittels der Nutzungseinrichtung, auf die der Datenträger personalisiert ist, genutzt werden. Hierdurch kann beispielsweise festgelegt werden, dass nur ein vorbestimmter Computer oder ein vorbestimmter CD-Spieler oder DVD-Spieler oder Speicherkartenleser den Datenträger nutzen kann.

Daher ist gemäß Anspruch 1 ein besonders sicheres Verfahren zum Zugreifen auf den Massenspeicher bei einem Datenträger mit einem Massenspeicher und einem Chip geschaffen, bei dem für den Zugriff auf den Massenspeicher mittels einer Nutzungseinrichtung eine Authentisierung der Nutzungseinrichtung gegenüber dem Chip zwingend erforderlich ist.

Wahlweise ist der Chip mit mehreren unterschiedlichen individuellen Daten einer einzelnen Nutzungseinrichtung personalisiert.

Vorzugsweise sind die Daten in dem Massenspeicher zumindest teilweise verschlüsselt abgespeichert, wobei in dem Chip weiter ein Schlüssel zum Entschlüsseln der verschlüsselten Daten abgespeichert ist. Die Verschlüsselung der Daten bietet einen zusätzlichen Schutz und verhindert, dass der Massenspeicher des Datenträgers ggf. unter Umgehung des Chips genutzt wird.

Vorzugsweise werden weiter, nachdem der Zugriff auf den Massenspeicher gewährt worden ist, weil der Datenträger auf die zugreifende Nutzungseinrichtung personalisiert ist (d.h. nachdem sich die Nutzungseinrichtung gegenüber dem Chip authentisiert hat bzw. nachdem der Chip personalisiert worden ist), die Daten aus dem Massenspeicher mit dem Schlüssel aus dem Chip entschlüsselt.

Gemäß einer bevorzugten Ausführungsform werden die Daten innerhalb des Chips entschlüsselt. Dies hat den Vorteil, dass der Schlüssel den Chip nicht verlassen muss. Alternativ, und falls die Nutzungseinrichtung (Computer, CD-Spieler, DVD-Spieler) ein Sicherheitsmodul wie z.B. ein TPM (Trusted Platform Modul) hat, werden die Daten wahlweise im Sicherheitsmodul (z.B. TPM) entschlüsselt.

Das individuelle Datum wird vorzugsweise geheim gehalten. Auf diese Weise ist sicher gestellt, dass das individuelle Datum nicht abgehört und kopiert werden kann. Beispielsweise ist das individuelle Datum dadurch geheim gehalten, dass es verschlüsselt im Chip abgelegt ist bzw. wird und außerhalb des Chips niemals im Klartext bereitgehalten wird, beispielsweise den Chip nie im Klartext verlässt. Alternativ kann vorgesehen sein, dass das individuelle Datum den Chip gar nicht verlässt.

Die Nutzungseinrichtung weist vorzugsweise einen Mikroprozessor auf, wobei als individuelles Datum ein individueller Parameter des Mikroprozessors verwendet wird, insbesondere die Mikroprozessor-Seriennummer. Der Mikroprozessor kann, je nach Art des Nutzungsgeräts, der Mikroprozessor eines Computers sein oder ein Mikroprozessor eines CD/DVD-Laufwerks eines Computers oder ein Mikroprozessor eines CD/DVD-Abspielgeräts bzw. CD/DVD-Aufnahme-Abspielgeräts mit einem Mikroprozessor.

Gemäß einer bevorzugten Ausführungsform ist das mindestens eine individuelle Datum in der Nutzungseinrichtung in einem Sicherheitsmodul wie z.B. einem Trusted Platform Modul (TPM) abgespeichert. Das Sicherheitsmodul (z.B. Trusted Platform Modul (TPM)) hat einen Mikroprozessor-Chip, in dem Daten verschlüsselt installiert sind. Für einen Computer ist beispielsweise bevorzugt die Seriennummer oder ein anderer individueller Parameter des Computer-Mikroprozessors in einem Sicherheitsmodul (z.B. TPM) verschlüsselt installiert. Weiter kann ein Computer oder andere Nutzungseinrichtung weitere elektronische Komponente aufweisen, wie z.B. einen Mikroprozessor und/oder eine CPU und/ oder eine Netzwerkkarte und/oder einen Massenspeicher und/oder ein Sicherheitsmodul. In diesem Fall ist in dem Sicherheitsmodul wahlweise - alternativ oder zusätzlich zur Seriennummer (bzw. sonstigem individuellen Parameter) des Mikroprozessors - ein individueller Parameter (z.B. Seriennummer) einer oder mehrerer der genannten oder weiterer elektronischer Komponenten installiert. Das Sicherheitsmodul (z.B. TPM) ermöglicht es einem Nutzer, die im Sicherheitsmodul (z.B. TPM) verschlüsselt installierten Daten auszulesen und zu Bearbeitungszwecken zur Verfügung zu stellen, beispielsweise um einen Vergleich mit anderen Daten durchzuführen, ohne dass die Daten dem Nutzer im Klartext zur Verfügung gelangen, d.h. wobei die ausgelesenen Daten gegenüber dem Nutzer geheim bleiben.

Die Daten im Massenspeicher können mit einem symmetrischen oder mit einem asymmetrischen Verschlüsselungsverfahren verschlüsselt sein.

Vorzugsweise ist der im Chip abgespeicherte Schlüssel für jeden Datenträger individuell. Zum Verschlüsseln der Daten, bevor sie in den Massenspeicher gespeichert werden, wird vorzugsweise ein universeller Schlüssel verwendet, der für eine Vielzahl von Datenträgern identisch ist.

Wahlweise ist der Chip dazu eingerichtet, dass in dem Chip individuelle Daten mehrerer Nutzungseinrichtungen abgespeichert werden können. In diesem Fall ist der Datenträger auf mehrere Nutzungseinrichtungen personalisiert, von denen jede zur Nutzung der Daten im Massenspeicher des Datenträgers berechtigt ist.

Der Datenträger gemäß der Erfindung weist mindestens einen Massenspeicher und einen Chip auf. Weiter weist der Datenträger vorzugsweise eine Kontaktiereinrichtung zum Kontaktieren des Chips auf, wahlweise eine Kontaktiereinrichtung für kontaktbehaftete Kontaktierung und/oder eine Kontaktiereinrichtung für kontaktlose Kontaktierung. Um eine durch den Chip eventuell entstehende ungünstige Gewichtsverteilung auszugleichen, kann der Datenträger weiter ein oder mehrere Ausgleichsgewichte aufweisen.

Bei einem Verfahren zum Laden von Daten von einer Datenquelle in den Massenspeicher eines Datenträgers mit einem Massenspeicher und einem Chip wird bei einem Zugriff auf den Datenträger, um Daten in den Massenspeicher zu laden, der Chip daraufhin überprüft wird, ob in dem Chip mindestens ein für eine Nutzungseinrichtung individuelles Datum abgespeichert ist, durch das der Datenträger im Hinblick auf die mindestens eine vorbestimmte Nutzungseinrichtung personalisiert ist. Das Laden von Daten in den Massenspeicher wird nur ermöglicht, falls in dem Chip mindestens ein vorbestimmtes individuelles Datum einer Nutzungseinrichtung abgespeichert ist. Nachfolgend ist ein Zugriff auf die Daten im Massenspeicher nur mit der mindestens einen Nutzungseinrichtung, auf die der Datenträger personalisiert ist, möglich.

Die Daten werden wahlweise unter Zwischenschaltung eines kontaktbehafteten Computernetzwerks von der Datenquelle an den Datenträger übermittelt, um in den Massenspeicher des Datenträgers geladen zu werden. Das Computernetzwerk kann beispielsweise ein Internet-Netzwerk, Intranet-Netzwerk oder dergleichen sein. Wahlweise werden die Daten per E-Mail an den Datenträger übermittelt.

Wahlweise werden Daten unter Zwischenschaltung eines kontaktlosen Netzwerks von der Datenquelle an den Datenträger übermittelt, um in den Massenspeicher des Datenträgers geladen zu werden. Das kontaktlose Netzwerk kann beispielsweise ein Mobilfunknetzwerk sein, wie z.B. ein GSM oder UMTS Netzwerk, oder ein WLAN-Netzwerk (WLAN = Wireless Local Area Network). In einem Mobilfunknetzwerk werden die Daten wahlweise per SMS übertragen oder mit einem Dienst zur direkten Datenübertragung.

Die Daten können wahlweise von der Datenquelle direkt an den Datenträger übermittelt werden. Alternativ werden die Daten zuerst von der Datenquelle an ein Endgerät wie z.B. einen Computer, Notebook, Mobiltelefon, PDA (Personal Digital Assistant) oder dergleichen übermittelt und von dem Endgerät in den Massenspeicher des Datenträgers geladen.

Beispielsweise ist der Datenträger eine CD oder DVD mit Chip. Im Chip ist eine Seriennummer oder dergleichen angespeichert. Die Daten werden zuerst von der Datenquelle in einen Computer etc. geladen und anschließend auf CD oder DVD gebrannt.

Das Laden der Daten wird vorzugsweise wie folgt vorgenommen:
- das im Chip abgespeicherte individuelle Datum vom Chip wird in den Verfügungsbereich der Datenquelle übermittelt,
- unter der Verfügung der Datenquelle wird das übermittelte individuelle Datum ausgewertet und
- die Daten werden an den Datenträger übermittelt, um sie in den Massenspeicher zu laden.

Dabei können natürlich die Daten wieder über die Vermittlung eines Endgeräts an den Datenträger übermittelt werden.

Vorzugsweise werden die Daten verschlüsselt in den Massenspeicher geladen. Gemäß einer bevorzugten Ausführungsform werden die Daten mit einem Schlüssel verschlüsselt, der aus dem individuellen Datum im Chip des Datenträgers ermittelt ist.

Im folgenden wird die Erfindung an Hand von Ausführungsbeispielen und unter Bezugnahme auf die Zeichnung näher erläutert, in der zeigen:
- Fig.1: eine beispielhafte erfindungsgemäße CD/DVD, die einen optischen Speicher, einen Chip, ein Kontaktfeld zum Kontaktieren des Chips und zwei Ausgleichsgewichte aufweist;
- Fig. 2: ein Beispiel für ein zur Anbringung auf einer CD/DVD vorgesehenes Kontaktfeld zur kontaktbehafteten Kontaktierung eines auf der CD/DVD angeordneten Chips;
- Fig. 3: ein weiteres Beispiel für ein zur Anbringung auf einer CD/DVD vorgesehenes Kontaktfeld zur kontaktbehafteten Kontaktierung eines auf der CD/DVD angeordneten Chips;
- Fig. 4: eine erfindungsgemäße CD/DVD mit einem optischen Speicher, einem Chip und einem Ausgleichsgewicht, sowie eine für die erfindungsgemäße CD/DVD eingerichtete Leseeinrichtung mit einer Einrichtung zum Zugreifen auf den Chip;
- Fig. 5: ein Flussdiagramm zur Veranschaulichung eines Verfahrens zum Zugreifen auf den Massenspeicher eines Datenträgers, gemäß einer bevorzugten Ausführungsform der Erfindung;
- Fig. 6: ein Flussdiagramm zur Veranschaulichung eines Verfahrens zum Zugreifen auf den Massenspeicher eines Datenträgers, gemäß einer weiteren bevorzugten Ausführungsform der Erfindung;
- Fig. 7: ein Flussdiagramm zur Veranschaulichung einer Variante des Verfahrens aus Fig. 6, bei der eine Personalisierung des Datenträgers auf mehrere Nutzungseinrichtungen möglich sein kann.

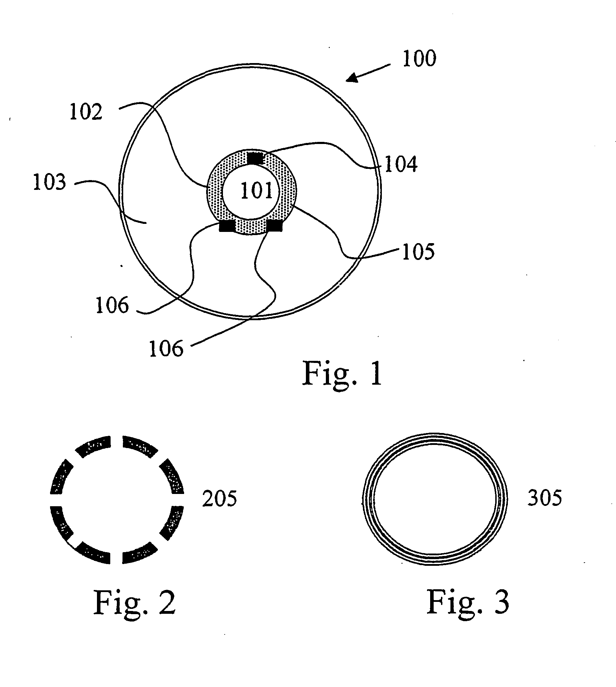

Fig. 1 zeigt eine beispielhafte erfindungsgemäße CD/DVD 100. Die CD/DVD 100 hat, wie eine herkömmliche CD/DVD, ein Mittelloch 101, rund um das ein ringförmiger, von optischem Speicher freier Bereich 102 angeordnet ist, rund um den ein weiterer ringförmiger Datenbereich 103 angeordnet ist. Im Datenbereich 103 ist ein optischer Speicher (Massenspeicher) vorgesehen. Im Unterschied zu einer herkömmlichen CD/DVD 100 sind bei der erfindungsgemäßen CD/DVD 100 aus Fig. 1 im freien Bereich 102 zwischen dem optischen Speicher 103 und dem Mittelloch 101 ein Chip 104, ein Kontaktfeld 105 zum Kontaktieren des Chips 104 und zwei Ausgleichsgewichte 106 angeordnet. Der Chip 104 und die Ausgleichsgewichte 106 sind so angeordnet, dass die CD/DVD 100 möglichst keine Unwucht hat, und dass der Schwerpunkt möglichst im Mittelpunkt der kreisförmigen CD/DVD 100 liegt. Wahlweise sind keine oder eine andere geeignete Anzahl und Anordnungsweise von Ausgleichsgewichten vorgesehen.

Fig. 2 zeigt ein Beispiel für ein zur Anbringung auf einer CD/DVD wie der in Fig. 1 gezeigten vorgesehenes Kontaktfeld 205 zur kontaktbehafteten Kontaktierung eines ebenfalls auf der CD/DVD angeordneten Chips. Das Kontaktfeld ist ringförmig gestaltet, so dass es auf einer CD/DVD 100 wie der in Fig. 1 gezeigten im freien Bereich 102 zwischen dem Mittelloch 101 und dem Datenbereich 103 angeordnet werden kann. Das Kontaktfeld 205 hat acht (allgemein typischerweise zwei bis zehn) einzelne Kontaktflächen in Gestalt von Ringsegmenten, die entlang einer Kreisbahn angeordnet sind.

Fig. 3 zeigt ein weiteres Beispiel für ein zur Anbringung auf einer CD/DVD vorgesehenes Kontaktfeld 305. Das Kontaktfeld 305 ist, ähnlich wie das Kontaktfeld 205 aus Fig. 2, ringförmig gestaltet, hat aber sechs konzentrisch zueinander angeordnete, ringförmige Kontaktflächen.

Bei einer erfindungsgemäßen CD/DVD ist beispielsweise im freien Bereich 102 zwischen dem Mittelloch 101 und dem Datenbereich 103 ein Kontaktfeld 205, 305 gemäß Fig. 2 oder Fig. 3, damit ein auf der CD/DVD 100 angeordneter Chip 104 kontaktiert werden kann. Die einzelnen Kontaktflächen (z.B. sechs bzw. acht Stücke) können z.B. gemäß ISO/IEC 7816 oder einem anderen Protokoll (USB, RS232/V.24, etc.) ansteuerbar sein. Das Kontaktfeld gemäß Fig. 3 mit den ringförmigen Kontaktflächen hat dabei den Vorteil, dass es auch dann kontaktiert werden kann, wenn die CD/DVD in Rotationsbewegung ist, z.B. weil gerade auf den ringförmigen optischen Speicher zugegriffen wird oder werden soll.

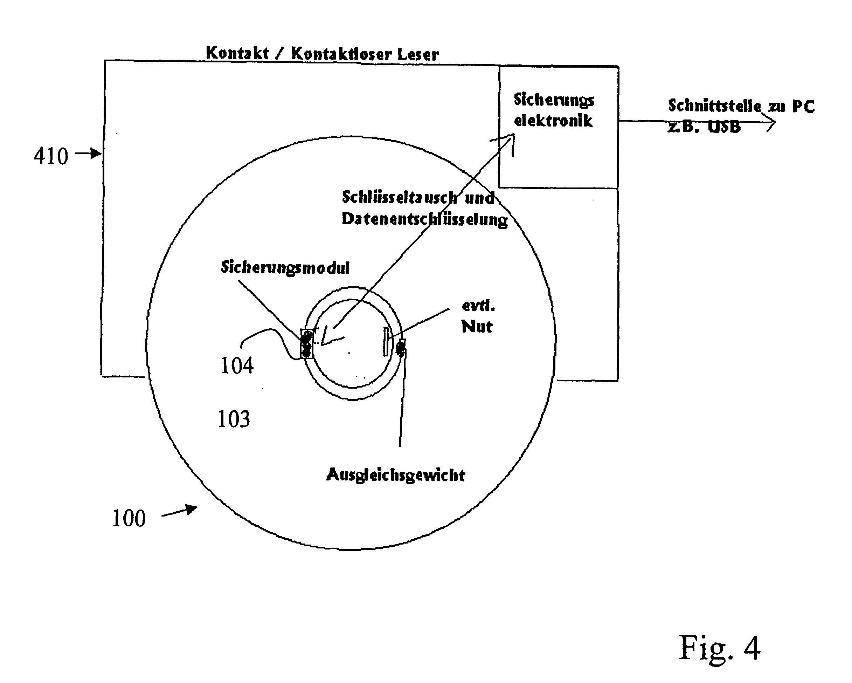

Fig. 4 zeigt eine erfindungsgemäße CD/DVD 100 mit einem optischen Speicher 103, einem Chip 104 und einem Ausgleichsgewicht, sowie eine für die erfindungsgemäße CD/DVD 100 eingerichtete Leseeinrichtung 410 mit einer Einrichtung zum Zugreifen auf den Chip.

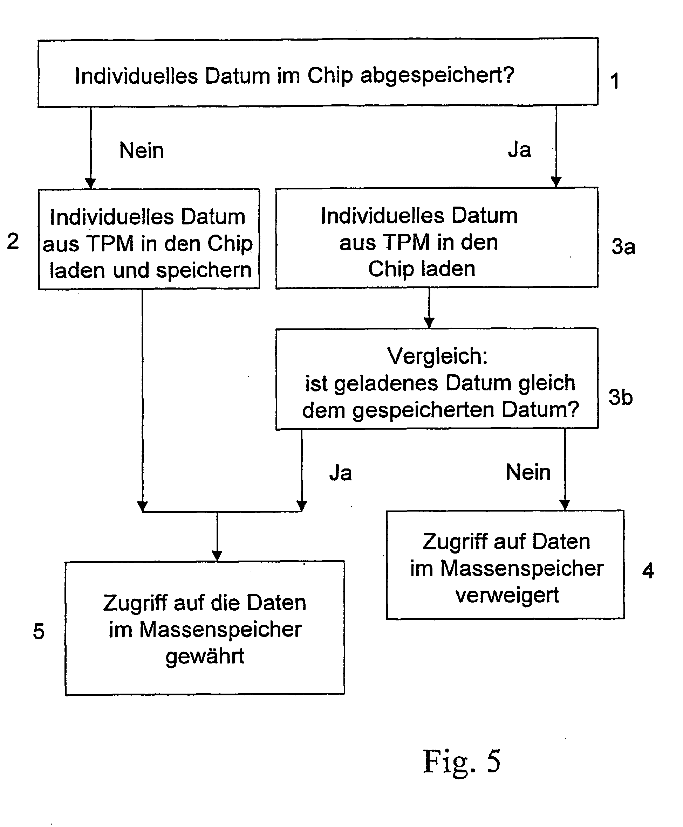

Fig. 5 zeigt ein Flussdiagramm zur Veranschaulichung der Grundzüge eines Verfahrens zum Zugreifen auf den Massenspeicher eines Datenträgers, gemäß einer bevorzugten Ausführungsform der Erfindung. Der Datenträger hat einen Massenspeicher mit Daten und einen Chip. Mit einer Nutzungseinrichtung wird versucht, auf die Daten im Massenspeicher zuzugreifen.

In Schritt 1 wird geprüft, ob der Chip des Datenträgers ein vorbestimmtes individuelles Datum enthält. Falls der Chip das vorbestimmte individuelle Datum nicht enthält oder keinerlei individuelles Datum enthält, wird in Schritt 2 das individuelle Datum aus einem Sicherheitsmodul der Nutzungseinrichtung, das hier als Trusted Platform Modul TPM gestaltet ist, in den Chip geladen und im Chip abgespeichert, wodurch der Datenträger auf die Nutzungseinrichtung personalisiert wird. Nachfolgend wird der Zugriff auf die Daten im Massenspeicher gewährt. Falls hingegen in dem Chip bereits ein vorbestimmtes individuelles Datum abgespeichert ist, wird in Schritt 3a das individuelle Datum in den Chip geladen und in Schritt 3b das geladene individuelle Datum mit dem bereits abgespeicherten individuellen Datum verglichen. Falls das geladene individuelle Datum und das bereits abgespeicherte individuelle Datum unterschiedlich sind, wird der Zugriff auf die Daten im Massenspeicher verweigert. Falls dagegen das geladene individuelle Datum und das bereits abgespeicherte individuelle Datum gleich sind, wird der Zugriff auf die Daten im Massenspeicher gewährt. Falls in dem Chip individuelle Daten mehrerer Nutzungseinrichtungen abgespeichert sind und der Datenträger also auf mehrere Nutzungseinrichtungen personalisiert ist, wird geprüft, ob unter den individuellen Daten ein individuelles Datum der gerade zugreifenden Nutzungseinrichtung ist und ansonsten analog verfahren wie bei einem Datenträger, der auf nur eine einzige Nutzungseinrichtung personalisiert ist.

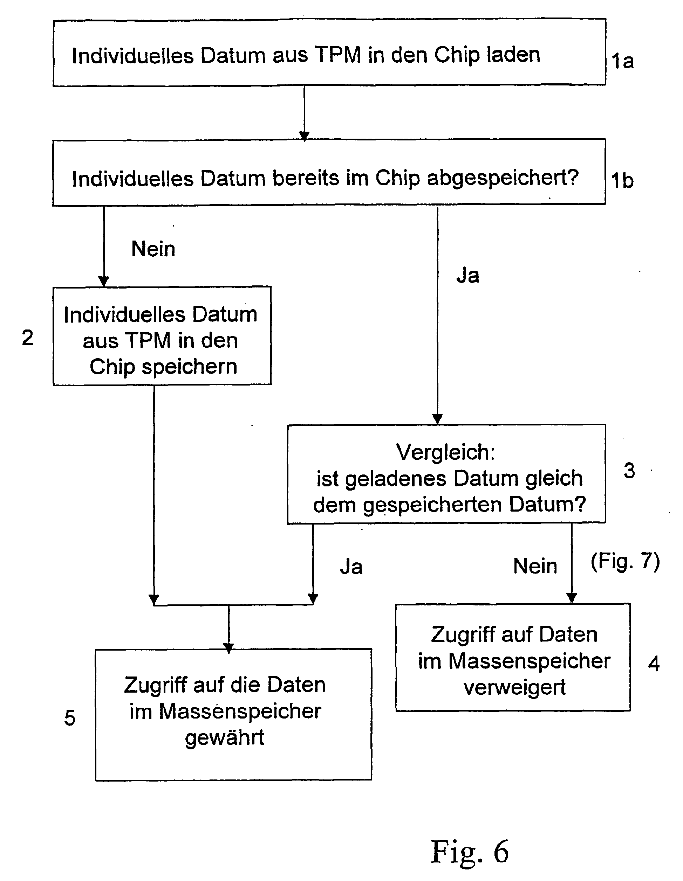

Fig. 6 zeigt ein ähnliches Flussdiagramm wie das in Fig. 5 gezeigte. Im Vergleich zum Verfahren gemäß Fig. 5 wird bei dem Verfahren gemäß Fig. 6 zunächst in jedem Fall in Schritt 1a ein vorbestimmtes individuelles Datum aus dem Sicherheitsmodul (hier ebenfalls beispielhaft als Trusted Platform Modul TPM gestaltet) der Nutzungseinrichtung in den Chip geladen. Danach wird in Schritt 1b überprüft, ob der Chip des Datenträgers ein vorbestimmtes individuelles Datum enthält. Falls der Chip das vorbestimmte individuelle Datum nicht enthält wird in Schritt 2 das individuelle Datum aus dem TPM der Nutzungseinrichtung im Chip abgespeichert, wodurch der Datenträger auf die Nutzungseinrichtung personalisiert wird. Nachfolgend wird der Zugriff auf die Daten im Massenspeicher gewährt. Falls hingegen in dem Chip bereits ein vorbestimmtes individuelles Datum abgespeichert ist, wird in Schritt 3 das nun bereits geladene individuelle Datum mit dem vorab abgespeicherten individuellen Datum verglichen. Der weitere Verfahrensverlauf ist der gleiche wie beim Verfahren von Fig. 5.

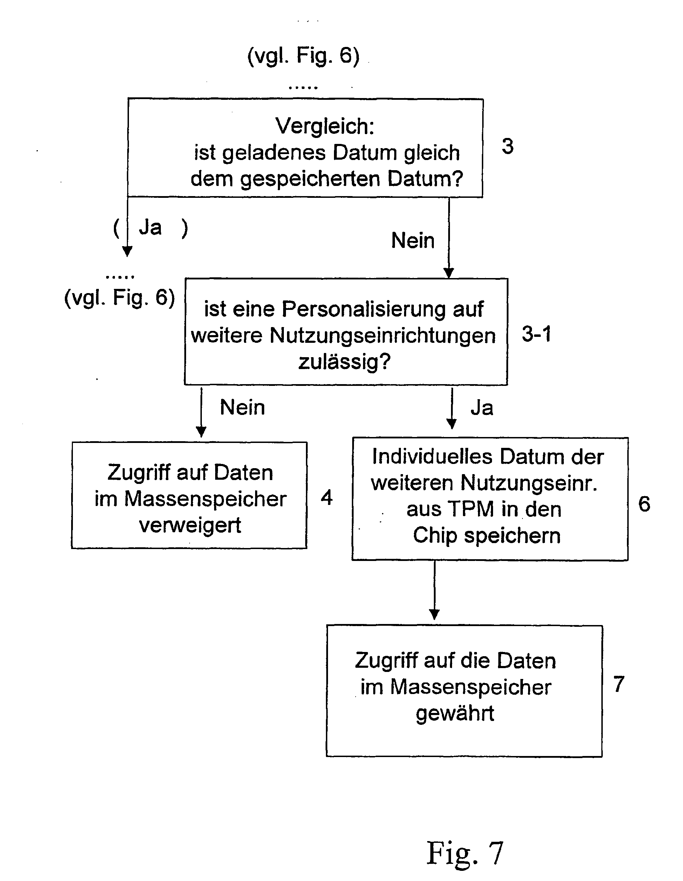

In Fig. 7 ist eine Variante des Verfahrens aus Fig. 6 gezeigt, bei der ein Datenträger auf mehrere Nutzungseinrichtungen personalisiert sein kann. Bei der Variante aus Fig. 7 wird im Anschluss an Schritt 3, falls in dem Chip bereits ein individuelles Datum vorgefunden wird, dieses aber nicht einem in Schritt 1a geladenen individuellen Datum der gerade zugreifenden Nutzungseinrichtung entspricht bzw. nicht zu der zugreifenden Nutzungseinrichtung gehört, in einem Schritt 3-1 geprüft, ob eine Personalisierung des Datenträgers auf eine weitere Nutzungseinrichtung zulässig ist. Falls nein, wird, wie gemäß Fig. 6 gehabt, der Zugriff auf Daten im Massenspeicher verweigert (Schritt 4). Falls hingegen eine Personalisierung des Datenträgers auf eine weitere Nutzungseinrichtung zulässig ist ("Ja"), wird das in Schritt 1a geladene Datum in einem Schritt 6 im Chip des Datenträgers abgespeichert, um den Datenträger auf eine weitere Nutzungseinrichtung zu personalisieren. Schließlich wird in Schritt 7 der Zugriff auf die Daten im Massenspeicher des Datenträgers gewährt.

Im Folgenden werden im Detail Verfahren zum Zugreifen auf eine erfindungsgemäße CD mit Chip gemäß bevorzugten Ausführungsformen der Erfindung im Einzelnen dargelegt. Die CD hat einen optischen Speicher mit einem verschlüsselten Bereich, in dem Daten verschlüsselt abgelegt sind, und einem unverschlüsselten Bereich zum Booten. Der verschlüsselte bzw. unverschlüsselte Bereich kann jeweils zusammenhängend sein oder alternativ mehrere unzusammenhängende Teilbereiche haben. Im Chip ist ein Schlüssel zum Entschlüsseln der Daten abgespeichert. Auf die CD wird mit einem CD-Laufwerk eines Computers zugegriffen. Der Computer enthält ein Sicherheitsmodul, hier beispielhaft als Trusted Platform Modul TPM gestaltet, in dem die Mikroprozessornummer des Mikroprozessors des Computers sicher abgespeichert ist. Als individuelles Datum wird bei den beispielhaft beschriebenen Verfahren die Mikroprozessornummer des Computers aus dem TPM des Computers verwendet. Alternativ oder zusätzlich kann die Seriennummer einer anderen Computerkomponente (Netzwerkkarte, Massenspeicher etc.) verwendet werden bzw. ein anderes individuelles Datum als die Seriennummer des Mikroprozessors bzw. der Computerkomponente.

Für andere Arten von Datenträgern (DVD, SC, CF, MMC), für andere Arten von Abspielgeräten für Datenträger, insbesondere für andere CD/DVD-Laufwerke wie z.B. CD/DVD-Laufwerke in CD/DVD-Abspielgeräten funktioniert das Verfahren analog.

Die CD wird in das CD-Laufwerk des Computers (bzw. Abspielgeräts etc.) eingelegt. Aus dem unverschlüsselten Bereich des optischen Massenspeichers der CD wird ein Installations-Programm (Start- bzw. Boot-Programm) hochgefahren, durch das eine erste Kommunikation mit der CD ermöglicht wird. Das Installations-Programm erkennt, dass eine Nutzungseinrichtung über ein CD-Laufwerk versucht, auf die CD zuzugreifen und verlangt vom Nutzer, die Authentisierung der zugreifenden Nutzungseinrichtung durchzuführen. Hierzu muss auf den Chip der CD zugegriffen werden.

Gemäß einer ersten Alternative enthält das CD-Laufwerk einen Chipleser (genauer Chip-Lese-Schreibgerät). In diesem Fall beginnt als nächstes der Chipleser die Kommunikation mit dem Chip der CD.

Gemäß einer zweiten Alternative hat das CD-Laufwerk keinen Chipleser. In diesem Fall wird der Nutzer aufgefordert, die CD aus dem CD-Laufwerk zu nehmen. Nachfolgend kontaktiert der Nutzer den Chip mit einem kontaktbehafteten oder kontaktlosen Chipleser. Gemäß einer bevorzugten Variante wird ein kontaktloser Chipleser verwendet, der in den Computer integriert ist. Weiter vorzugsweise ist der integrierte Chipleser über eine NFC-Schnittstelle kontaktierbar, die "automatisch" mit dem Chip in Kommunikation tritt, sobald die CD nahe genug angenähert worden ist.

Der Chipleser (intern oder extern) tritt in Kontakt mit dem TPM des Computers und sendet an das TPM eine Aufforderung, die Mikroprozessornummer an den Chip zu senden, sowie einen Transportschlüssel, mit dem das TPM die Mikroprozessornummer verschlüsseln soll. Der Transportschlüssel ist vorzugsweise ein öffentlicher Schlüssel eines PKI-Schlüsselpaares. Das TPM verschlüsselt im TPM die Mikroprozessornummer mit dem Transportschlüssel und sendet die verschlüsselte Mikroprozessornummer an den Chip der CD. Der Chip empfängt die verschlüsselte Mikroprozessornummer, entschlüsselt sie mit dem geheimen Schlüssel zu dem PKI-Schlüsselpaar und speichert sie im Chip ab.

Als nächstes überprüft der Chipleser, ob in dem Chip eine Mikroprozessornummer eines Computers abgespeichert ist. Wahlweise erfolgt die Überprüfung, ob in dem Chip eine Mikroprozessornummer eines Computers abgespeichert ist, bereits vor dem Anfordern der Mikroprozessornummer beim TPM.

Falls im Chip noch keine Mikroprozessornummer abgespeichert ist, wird die geladene Mikroprozessornummer in einen dafür vorgesehenen Speicher des Chips abgelegt (bzw. wird, falls noch keine Mikroprozessornummer geladen worden ist, die Mikroprozessornummer vom TPM des Computers angefordert, wie oben beschrieben, und dann in dem Speicher abgelegt). Hierdurch ist die CD auf den Computer personalisiert worden.

Die CD ist nun bereit zum Entschlüsseln der Daten im optischen Speicher. Das entsprechende Verfahren wird später noch beschrieben.

Falls im Chip bereits eine Mikroprozessornummer abgespeichert ist, vergleicht der Chip die vom TPM gelieferte Mikroprozessornummer mit der Mikroprozessornummer, die bereits zur Personalisierung der CD im Chip abgespeichert ist.

Falls die gelieferte und die bereits abgespeicherte Mikroprozessornummer nicht übereinstimmen, wird der Zugriff auf die Daten im optischen Speicher der CD verwehrt.

Falls die gelieferte und die bereits abgespeicherte Mikroprozessornummer übereinstimmen, ist die CD bereit zum Entschlüsseln der Daten im optischen Speicher.

Zum Entschlüsseln der Daten im optischen Speicher der CD wird die Kommunikation wieder an das CD-Laufwerk übergeben. Bedarfsweise muss dazu die CD, die zuvor aus dem CD-Laufwerk entnommen worden ist, wieder in das CD-Laufwerk eingelegt werden. Das CD-Laufwerk liest die verschlüsselten bzw. teilweise verschlüsselten Daten aus dem optischen Speicher der CD in einen für das CD-Laufwerk und den Chipleser gleichermaßen zugänglichen Zwischenspeicher.

Nachfolgend wechselt die Kommunikation wieder auf den Chip, wobei bedarfsweise die CD wieder aus dem CD-Laufwerk entnommen und mit dem Chipleser gekoppelt werden muss. Der Chipleser überträgt die zuvor in den Zwischenspeicher übertragenen Daten in den Chip.

Im Chip werden die Daten entschlüsselt. Alternativ werden die Daten im Zwischenspeicher des CD-Laufwerks entschlüsselt, wozu der im Chip abgespeicherte Entschlüsselungsschlüssel an das CD-Laufwerk übertragen wird, wobei der Entschlüsselungsschlüssel vorzugsweise nie im Klartext den Chip verlässt, also selbst wieder verschlüsselt ist.

Die entschlüsselten Daten werden in einen dafür vorgesehenen Speicher des Computers installiert und können nachfolgend bestimmungsgemäß verwendet werden.

In der Nutzungseinrichtung ist das individuelle Datum, mit dem der Datenträger personalisiert worden ist oder noch werden soll, wahlweise in einem Sicherheitsmodul (z.B. TPM) vorgesehen. Das Sicherheitsmodul kann beispielsweise in einem Computer, einem Schreib-/Leselaufwerk eines Computers, einem Abspielgerät für den Datenträger oder einer der Komponenten eines solchen Abspielgeräts vorgesehen sein. Ein - kontaktloses (insbesondere NFC, alternativ anderes Protokoll) oder kontaktbehaftetes - Lesegerät für den Chip des Datenträgers kann ebenfalls in einem Computer, einem Schreib-/Leselaufwerk eines Computers, einem Abspielgerät für den Datenträger oder einer der Komponenten eines solchen Abspielgeräts vorgesehen sein. Das Lesegerät für den Chip des Datenträgers und das Sicherheitsmodul (z.B. TPM) der Nutzungseinrichtung können wahlweise getrennt oder in Kombination miteinander untergebracht sein, wahlweise in demselben Teil der Nutzungseinrichtung oder in unterschiedlichen Teilen der Nutzungseinrichtung.

Die Daten können beispielsweise Programmdaten eine Programms sein, das nun im Computer installiert werden kann.

Gemäß einer alternativen Ausführungsform der Erfindung ist der Datenträger eine Musik-CD mit einem optischen Speicher, in dem Musikdaten abgespeichert sind, die derart teilweise verschlüsselt sind, dass die Musik, die den Daten entspricht, zwar analog (akustisch) ausgegeben werden kann, dies aber nur in schlechter, verrauschter Tonqualität. In unverrauschter Form können die Daten analog nur ausgegeben werden, nachdem sie entschlüsselt worden sind.

Gemäß einer weiteren alternativen Ausführungsform der Erfindung ist der Datenträger eine Film-DVD mit einem optischen Speicher, in dem Filmdaten abgespeichert sind. Ansonsten entspricht die DVD der weiter oben beschriebenen Musik-CD. Alternativ ist als Datenträger eine Musik/Film-DVD vorgesehen.

Gemäß einer Weiterbildung der Erfindung, die in einer anderen, am selben Tag eingereichten Patentanmeldung beschrieben ist, weist der Datenträger zusätzlich ein Zustandskennzeichen auf, durch das der Umfang der Nutzung des Datenträgers begrenzt ist, z.B. die Anzahl von Malen der Nutzung oder/ und die Nutzungsdauer. Beispielsweise kann als Zustandskennzeichen ein Flag oder Zähler vorgesehen sein, der gesetzt bzw. hochgezählt (alternativ heruntergezählt) wird, wenn Daten aus dem Massenspeicher genutzt werden, z.B. abgespielt oder installiert werden. Wahlweise wird, wenn die Daten wieder deinstalliert werden, das Flag wieder gelöscht bzw. der Zähler wieder heruntergezählt (alternativ hochgezählt).

## Patentansprüche

1. Verfahren zum Zugreifen auf den Massenspeicher eines Datenträgers mit einem Massenspeicher und einem Chip mittels einer Nutzungseinrichtung,
wobei die Nutzungseinrichtung mindestens eine elektronische Komponente aufweist, und wobei für den Zugriff auf den Massenspeicher eine Authentisierung der Nutzungseinrichtung gegenüber dem Chip zwingend erforderlich ist,
**dadurch gekennzeichnet, dass**
bei einem Zugriff einer Nutzungseinrichtung (410) auf den Datenträger (100), um auf den Massenspeicher (103) zuzugreifen, der Chip (104) daraufhin überprüft wird, ob in dem Chip (104) ein für die Nutzungseinrichtung (410) individuelles Datum abgespeichert ist, durch das der Datenträger im Hinblick auf die Nutzungseinrichtung (410) personalisiert ist, wobei als individuelles Datum ein individueller Parameter der elektronischen Komponente verwendet wird, und der Zugriff auf den Massenspeicher (103) höchstens ermöglicht wird (5), falls in dem Chip (104) mindestens ein vorbestimmtes individuelles Datum der zugreifenden Nutzungseinrichtung (410) abgespeichert ist,
wobei, falls gemäß der Überprüfung in dem Chip bereits mindestens ein vorbestimmtes individuelles Datum abgespeichert ist:
- die Bereitstellung des individuellen Datums der zugreifenden Nutzungseinrichtung (410) aus der Nutzungseinrichtung (410) angefordert wird,
- das im Chip (104) abgespeicherte individuelle Datum und das aus der zugreifenden Nutzungseinrichtung (410) bereitgestellte Datum miteinander verglichen werden (3, 3b) und
- höchstens bei einem positiven Vergleichsergebnis der Zugriff der Nutzungseinrichtung (410) auf den Massenspeicher (103) des Datenträgers ermöglicht wird (5),
und wobei, falls gemäß der Überprüfung kein individuelles Datum im Chip (104) abgespeichert ist, mindestens ein vorbestimmtes individuelles Datum der Nutzungseinrichtung (410) in den Chip (104) gespeichert wird.

2. Verfahren nach Anspruch 1, wobei, bevor das vorbestimmte individuelle Datum der Nutzungseinrichtung (410) in den Chip (104) gespeichert wird, der Chip (104) an die Nutzungseinrichtung (410) einen im Chip (104) abgespeicherten Verschlüsselungsschlüssel sendet und
die Nutzungseinrichtung (410) das vorbestimmte individuelle Datum mit dem Verschlüsselungsschlüssel verschlüsselt und das verschlüsselte individuelle Datum an den Chip (104) sendet.

3. Verfahren nach einem der Ansprüche 1 bis 2, wobei die Daten in dem Massenspeicher (103) zumindest teilweise verschlüsselt abgespeichert sind, und wobei in dem Chip (104) weiter ein Schlüssel zum Entschlüsseln der verschlüsselten Daten abgespeichert ist, und wobei die Daten aus dem Massenspeicher (103) mit dem Schlüssel aus dem Chip (104) entschlüsselt werden.

4. Verfahren nach Anspruch 3, wobei die Daten innerhalb des Chips (104) entschlüsselt werden oder in einem Sicherheitsmodul, insbesondere Trusted Platform Modul (TPM), der Nutzungseinrichtung (410) entschlüsselt werden.

5. Verfahren nach einem der Ansprüche 1 bis 4, wobei das individuelle Datum geheim gehalten wird.

6. Verfahren nach einem der Ansprüche 1 bis 5, wobei als elektronische Komponente vorgesehen ist: ein Mikroprozessor und/oder eine CPU und/oder eine Netzwerkkarte und/ oder ein Massenspeicher (103) und/ oder ein Sicherheitsmodul.

7. Verfahren nach einem der Ansprüche 1 bis 6, wobei das mindestens eine individuelle Datum in der Nutzungseinrichtung (410) in einem Sicherheitsmodul, insbesondere Trusted Platform Modul (TPM), abgespeichert ist.

8. Verfahren nach einem der Ansprüche 1 bis 7, wobei die Nutzungseinrichtung (410) eine Datenverarbeitungseinrichtung, wie ein Computer, mit zumindest einer Leseeinheit für den Massenspeicher (103) ist.

9. Verfahren nach einem der Ansprüche 1 bis 7, wobei die Nutzungseinrichtung (410) eine Ausgabeeinrichtung, wie eine Ausgabeeinrichtung zur analogen Ausgabe von Multimediadaten wie z.B. Musikdaten und/oder Filmdaten, ist.

10. Verfahren zum Laden von Daten von einer Datenquelle in den Massenspeicher eines Datenträgers mit einem Massenspeicher und einem Chip mittels einer Nutzungseinrichtung, wobei die Nutzungseinrichtung mindestens eine elektronische Komponente aufweist, und wobei für den Zugriff auf den Massenspeicher eine Authentisierung der Nutzungseinrichtung gegenüber dem Chip zwingend erforderlich ist,
**dadurch gekennzeichnet, dass**
bei einem Zugriff auf den Datenträger, um Daten in den Massenspeicher (103) zu laden, der Chip (104) daraufhin überprüft wird, ob in dem Chip (104) mindestens ein für eine Nutzungseinrichtung (410) individuelles Datum abgespeichert ist, durch das der Datenträger im Hinblick auf die mindestens eine vorbestimmte Nutzungseinrichtung (410) personalisiert ist, wobei als individuelles Datum ein individueller Parameter der elektronischen Komponente verwendet wird, und das Laden von Daten in den Massenspeicher (103) höchstens ermöglicht wird, falls in dem Chip (104) mindestens ein vorbestimmtes individuelles Datum einer Nutzungseinrichtung (410) abgespeichert ist,
wobei, falls gemäß der Überprüfung in dem Chip bereits mindestens ein vorbestimmtes individuelles Datum abgespeichert ist:
- die Bereitstellung des individuellen Datums der zugreifenden Nutzungseinrichtung (410) aus der Nutzungseinrichtung (410) angefordert wird,
- das im Chip (104) abgespeicherte individuelle Datum und das aus der zugreifenden Nutzungseinrichtung (410) bereitgestellte Datum miteinander verglichen werden (3, 3b) und
- höchstens bei einem positiven Vergleichsergebnis der Zugriff der Nutzungseinrichtung (410) auf den Massenspeicher (103) des Datenträgers ermöglicht wird (5),
und wobei, falls gemäß der Überprüfung kein individuelles Datum im Chip (104) abgespeichert ist, mindestens ein vorbestimmtes individuelles Datum der Nutzungseinrichtung (410) in den Chip (104) gespeichert wird,
wobei nachfolgend ein Zugriff auf die Daten im Massenspeicher (103) höchstens mit der mindestens einen Nutzungseinrichtung (410), auf die der Datenträger personalisiert ist, möglich ist,
wobei zum Laden der Daten
- das im Chip (104) abgespeicherte individuelle Datum vom Chip (104) in den Verfügungsbereich der Datenquelle übermittelt wird
- unter der Verfügung der Datenquelle das übermittelte individuelle Datum ausgewertet wird und
- die Daten an den Datenträger übermittelt werden, um sie in den Massenspeicher (103) zu laden.

11. Verfahren nach Anspruch 10, wobei die Daten unter Zwischenschaltung eines kontaktbehafteten Computemetzwerks oder/und eines kontaktlosen Netzwerks von der Datenquelle an den Datenträger übermittelt werden, um in den Massenspeicher (103) des Datenträgers geladen zu werden.

12. Verfahren nach Anspruch 10 oder 11, wobei die Daten verschlüsselt in den Massenspeicher (103) geladen werden, wobei die Daten mit einem Schlüssel verschlüsselt werden, der aus dem individuellen Datum im Chip (104) des Datenträgers ermittelt ist.

## Claims

1. A method for accessing the mass memory of a data carrier with a mass memory and a chip by means of a use device, wherein the use device has at least one electronic component, and wherein for accessing the mass memory an authentication of the use device vis-à-vis the chip is mandatory,
**characterized in that**
upon access by a use device (410) to the data carrier (100) in order to access the mass memory (103), the chip (104) is checked in view of whether in the chip (104) a date which is individual for the use device (410) is stored, by means of which the data carrier is personalized to the use device (410), wherein as individual date an individual parameter of the electronic component is used, and the access to the mass memory (103) is at most enabled (5) if in the chip (104) at least one predetermined individual date of the accessing use device (410) is stored,
wherein, in the case that according to the check at least one predetermined individual date is already stored in the chip:
- the provision of the individual date of the accessing use device (410) is requested from the use device (410),
- the individual date stored in the chip (104) and the date provided by the accessing use device (410) are compared with each other (3, 3b) and
- at the most in the case of a positive comparison result the access of the use device (410) to the mass memory (103) of the data carrier is enabled (5),
and wherein, if according to the check no individual date is stored in the chip (104), at least one predetermined individual date of the use device (410) is stored in the chip (104).

2. The method according to claim 1, wherein, before the predetermined individual date of the use device (410) is stored in the chip (104), the chip (104) sends an encryption key stored in the chip (104) to the use device (410) and
the use device (410) encrypts the predetermined individual date with the encryption key and sends the encrypted individual date to the chip (104).

3. The method according to one of the claims 1 to 2, wherein the data in the mass memory (103) are at least partly stored in an encrypted state, and wherein in the chip (104) furthermore a key is stored for decrypting the encrypted data, and wherein the data from the mass memory (103) are decrypted with the key from the chip (104).

4. The method according to claim 3, wherein the data are decrypted within the chip (104) or are decrypted in a security module, in particular a trusted platform module (TPM) of the use device (410).

5. The method according to one of the claims 1 to 4, wherein in the individual date is kept secret.

6. The method according to one of the claims 1 to 5, wherein as electronic component is provided: a microprocessor and/or a CPU and/or a network interface card and/or a mass memory (103) and/or a security module.

7. The method according to one of the claims 1 to 6, wherein the at least one individual date is stored in the use device (410) in a security module, in particular a trusted platform module (TPM).

8. The method according to one of the claims 1 to 7, wherein the use device (410) is a data processing device, such as a computer, with at least one reading unit for the mass memory (103).

9. The method according to one of the claims 1 to 7, wherein the use device (410) is an output device, such as an output device for the analogous output of multimedia data such as e. g. audio data and/or video data.

10. A method for loading data from a data source into the mass memory of a data carrier with a mass memory and a chip by means of a use device, wherein the use device has at least one electronic component, and wherein for accessing the mass memory an authentication of the use device vis-à-vis the chip is mandatory,
**characterized in that**
upon access to the data carrier in order to load data into the mass memory (103), the chip (104) is checked in view of whether in the chip (104) at least one date which is individual for a use device (410) is stored, by means of which the data carrier is personalized to the at least one predetermined use device (410), wherein as individual date an individual parameter of the electronic component is used, and the loading of data into the mass memory (103) is at most enabled if in the chip (104) at least one predetermined individual date of a use device (410) is stored,
wherein, in the case that according to the check at least one predetermined individual date is already stored in the chip:
- the provision of the individual date of the accessing use device (410) is requested from the use device (410),
- the individual date stored in the chip (104) and the date provided by the accessing use device (410) are compared with each other (3, 3b) and
- at the most in the case of a positive comparison result the access of the use device (410) to the mass memory (103) of the data carrier is enabled (5),
and wherein, if according to the check no individual date is stored in the chip (104), at least one predetermined individual date of the use device (410) is stored in the chip (104),
wherein subsequently access to the data in the mass memory (103) is at most possible with the at least one use device (410) to which the data carrier is personalized,
wherein for loading the data
- the individual date stored in the chip (104) is transmitted by the chip (104) to the access range of the data source
- in the access range of the data source the transmitted individual date is evaluated and
- the data are transmitted to the data carrier to be loaded into the mass memory (103).

11. The method according to claim 10, wherein the data are transmitted with the interposition of a contact-type computer network or/and a contactless network from the data source to the data carrier, in order to be loaded into the mass memory (103) of the data carrier.

12. The method according to claim 10 or 11, wherein the data are loaded into the mass memory (103) in an encrypted state, wherein the data are encrypted with a key which is generated from the individual date in the chip (104) of the data carrier.

## Revendications

1. Procédé pour accéder à la mémoire de masse d'un support de données comprenant une mémoire de masse et une puce au moyen d'un dispositif d'utilisation, le dispositif d'utilisation comportant au moins un composant électronique, et une authentification du dispositif d'utilisation vis-à-vis de la puce étant impérativement indispensable pour l'accès à la mémoire de masse,
**caractérisé en ce que**
en cas d'accès d'un dispositif d'utilisation (410) au support de données (100) pour accéder à la mémoire de masse (103), la puce (104) est soumise à une vérification pour permettre de savoir si une donnée individuelle
pour le dispositif d'utilisation (410) par laquelle le support de données est personnalisé par rapport au dispositif d'utilisation (410) est mémorisée dans la puce (104), un paramètre individuel du composant électronique étant utilisé en tant que donnée individuelle, et l'accès à la mémoire de masse (103) étant rendue possible (5) au plus dans le cas où au moins une donnée individuelle prédéterminée du dispositif d'utilisation (410) effectuant l'accès est mémorisée dans la puce (104),
et, dans le cas où il ressort de la vérification effectuée dans la puce qu'au moins une donnée individuelle prédéterminée est déjà mémorisée :
- la mise à disposition de la donnée individuelle du dispositif d'utilisation (410) effectuant l'accès étant demandée de la part du dispositif d'utilisation (410),
- la donnée individuelle mémorisée dans la puce (104) et la donnée mise à disposition de la part du dispositif d'utilisation (410) effectuant l'accès étant comparées l'une avec l'autre (3, 3b) et
- l'accès du dispositif d'utilisation (410) à la mémoire de masse (103) du support de données étant rendu possible (5) au plus en cas d'un résultat positif de la comparaison,
et au moins une donnée individuelle prédéterminée du dispositif d'utilisation (410) étant mémorisée dans la puce (104) dans le cas où il ressort de la vérification qu'aucune donnée individuelle n'est mémorisée dans la puce (104).

2. Procédé selon la revendication 1, la puce (104) envoyant au dispositif d'utilisation (410) une clé cryptographique mémorisée dans la puce (104) avant que la donnée individuelle prédéterminée du dispositif d'utilisation (410) soit mémorisée dans la puce (104) et
le dispositif d'utilisation (410) cryptant la donnée individuelle prédéterminée avec la clé cryptographique et envoyant à la puce (104) la donnée individuelle cryptée.

3. Procédé selon une des revendications de 1 à 2, les données étant mémorisées de manière cryptée au moins en partie dans la mémoire de masse (103), et une clé destinée à décrypter les données cryptées continuant à être mémorisée dans la puce (104), et les données provenant de la mémoire de masse (103) étant décryptées avec la clé provenant de la puce (104).

4. Procédé selon la revendication 3, les données étant décryptées à l'intérieur de la puce (104) ou dans un module de sécurité, notamment Trusted Platform Modul (TPM), du dispositif d'utilisation (410).

5. Procédé selon une des revendications de 1 à 4, la donnée individuelle étant gardée secrète.

6. Procédé selon une des revendications de 1 à 5, le composant électronique prévu étant : un microprocesseur et / ou une CPU et /ou une carte réseau et /ou une mémoire de masse (103) et /ou un module de sécurité.

7. Procédé selon une des revendications de 1 à 6, la dite au moins une donnée individuelle étant mémorisée dans le dispositif d'utilisation (410) dans un module de sécurité, notamment Trusted Platform Modul (TPM).

8. Procédé selon une des revendications de 1 à 7, le dispositif d'utilisation (410) étant un dispositif de traitement des données, tel qu'un ordinateur, comportant au moins une unité de lecture pour la mémoire de masse (103).

9. Procédé selon une des revendications de 1 à 7, le dispositif d'utilisation (410) étant un dispositif de sortie, tel qu'un dispositif de sortie destiné à l'émission analogique de données multimédia telles que p. ex. données de musique et /ou données de film.

10. Procédé de chargement de données d'une source de données dans la mémoire de masse d'un support de données comprenant une mémoire de masse et une puce au moyen d'un dispositif d'utilisation, le dispositif d'utilisation comportant au moins un composant électronique, et une authentification du dispositif d'utilisation vis-à-vis de la puce étant impérativement indispensable pour l'accès à la mémoire de masse,
**caractérisé en ce que**
en cas d'accès au support de données pour enregistrer des données dans la mémoire de masse (103), la puce (104) est soumise à une vérification pour permettre de savoir si au moins une donnée individuelle pour un dispositif d'utilisation (410) par laquelle le support de données est personnalisé par rapport au dit au moins un dispositif d'utilisation (410) prédéterminé est mémorisée dans la puce (104), un paramètre individuel du composant électronique étant utilisé en tant que donnée individuelle, et le chargement de données dans la mémoire de masse (103) étant rendue possible au plus dans le cas où au moins une donnée individuelle prédéterminée d'un dispositif d'utilisation (410) est mémorisée dans la puce (104),
et, dans le cas où il ressort de la vérification effectuée dans la puce qu'au moins une donnée individuelle prédéterminée est déjà mémorisée :
- la mise à disposition de la donnée individuelle du dispositif d'utilisation (410) effectuant l'accès étant demandée de la part du dispositif d'utilisation (410),
- la donnée individuelle mémorisée dans la puce (104) et la donnée mise à disposition de la part du dispositif d'utilisation (410) effectuant l'accès étant comparées l'une avec l'autre (3, 3b) et
- l'accès du dispositif d'utilisation (410) à la mémoire de masse (103) du support de données étant rendu possible (5) au plus en cas d'un résultat positif de la comparaison,
et au moins une donnée individuelle prédéterminée du dispositif d'utilisation (410) étant mémorisée dans la puce (104) dans le cas où il ressort de la vérification qu'aucune donnée individuelle n'est mémorisée dans la puce (104),
un accès aux données dans la mémoire de masse (103) étant ensuite possible au plus avec le dit au moins un dispositif d'utilisation (410) sur lequel le support de données est personnalisé,
et, pour le chargement des données,
■ la donnée individuelle mémorisée dans la puce (104) étant transmise de la puce (104) dans la zone de disposition de la source de données
■ la donnée individuelle transmise étant dépouillée sous la disposition de la source de données et
■ les données étant transmises au support de données pour les charger dans la mémoire de masse (103).

11. Procédé selon la revendication 10, les données étant transmises de la source de données au support de données sous interposition d'un réseau informatique avec contact et / ou d'un réseau sans contact pour être chargées dans la mémoire de masse (103) du support de données.

12. Procédé selon la revendication 10 ou 11, les données étant chargées de manière cryptée dans la mémoire de masse (103), les données étant cryptées avec une clé qui est obtenue à partir de la donnée individuelle dans la puce (104) du support de données.
